# FASCICULE DE BREVET EUROPEEN

(11) **EP 4 620 930 B1**
(45) Date de publication et mention de la délivrance du brevet: **26.08.2026**
(21) Numéro de dépôt: 25164804.4
(22) Date de dépôt: 19.03.2025
(51) Int. Cl.: C03C 3/16, C03B 5/225, H01M 4/00

(54) **VERRES BINAIRES DE PHOSPHATE DE NICKEL, LEUR PROCÉDÉ D'OBTENTION, ET LEURS UTILISATIONS**
BINÄRE NICKELPHOSPHATGLÄSER, VERFAHREN ZU IHRER HERSTELLUNG UND IHRE VERWENDUNG
BINARY NICKEL PHOSPHATE GLASSES, METHOD FOR OBTAINING SAME, AND USES THEREOF

(30) Priorité: 20.03.2024 FR 2402783
(43) Date de publication de la demande: 24.09.2025
(73) Titulaire: Commissariat à l'Energie Atomique et aux Energies Alternatives, 75015 Paris (FR)
(72) Inventeur: GUYOT, Taos, 38054 Grenoble (FR); AGULLO, Julia, 38054 Grenoble (FR); CARDOSO, Alexi, 38054 Grenoble (FR); DELANOË, Alexis, 38054 Grenoble (FR); MARTINET, Sébastien, 38054 Grenoble (FR); PERRET, Damien, 38054 Grenoble (FR); SIMONIN, Loïc, 38054 Grenoble (FR)
(74) Mandataire: Gevers & Orès

(56) Documents cités:
- US-A1- 2018 183 044
- TAWATI D. M. ET AL: "Thermoelectric Power (TEP) of Semiconducting Nickel-Phosphate Glasses", AIP CONFERENCE PROCEEDINGS, vol. 1250, 7 July 2010 (2010-07-07), pages 93 - 96, XP093221789, DOI: 10.1063/1.3469742

## Description

La présente invention concerne des verres binaires de phosphate de nickel, ainsi que leur procédé d'obtention. L'invention vise également la préparation et l'utilisation desdits verres en tant que matériaux actifs d'électrodes positives, en particulier d'accumulateurs métal-ion, ainsi que lesdits matériaux actifs et électrodes *per se.*

Le LiCoO₂ (LCO) constitue la technologie de l'électrode positive du premier accumulateur lithium-ion commercialisé par Sony en 1991. Cette technologie présente une très forte densité d'énergie et une mise en œuvre relativement aisée. Néanmoins, l'instabilité liée à l'exploitation du dioxyde de cobalt (CoO₂) rend cette technologie peu sûre d'un point de vue industriel et les spéculations autour des prix du cobalt augmentent son prix.

Parmi les autres différentes technologies bien établies d'électrode positive de batterie Li-ion, le LiFePO₄ (LFP) est une technologie connue pour ses très bonnes caractéristiques en puissance et en cyclage, tout en présentant le grand avantage d'avoir une grande sécurité intrinsèque et d'avoir une très bonne durée de vie, que ce soit calendaire ou en cyclage.

Cependant, la capacité théorique de LiFePO₄ (170 mAh/g) associée à une tension moyenne de fonctionnement de 3,2V est un obstacle à son application dans les batteries nécessitant des densités d'énergie élevées. Cette contrainte est illustrée par l'autonomie limitée des véhicules électriques (inférieure à 160 km) équipés d'une telle technologie, ce qui limite leur introduction à grande échelle.

Pour augmenter les densités d'énergie, il est généralement nécessaire de développer de nouveaux matériaux cathodiques au-delà du LFP et du LCO qui sont capables d'échanger plus d'un Li par métal de transition.

L'élaboration d'électrodes positives à base de verre est une voie intéressante, notamment car ce matériau est facilement synthétisable. De plus le réseau vitreux permet théoriquement d'incorporer aisément les ions alcalins échangés lors du cyclage. À titre d'exemple, Tawati et. al. : "Thermoelectric Power (TEP) of Semiconducting Nickel-Phosphate Glasses", AIP CONFERENCE PROCEEDINGS, vol. 1250, 2010 et US 2018/183044 A1 décrivent des verres et des vitrocéramiques de phosphate. En raison des nombreux états d'oxydation accessibles du vanadium, les électrodes de verre à base de vanadate ont été considérées comme des alternatives intéressantes. Actuellement, les meilleures performances pour un verre à base de vanadium sont détenues par un matériau basé sur le système Li₂O -B₂O₃- V₂O₅ permettant d'atteindre les 1000 Wh/kg à l'échelle du matériau actif sur 10 cycles.

Toutefois, ce matériau reste limité par un potentiel de fonctionnement assez bas (2,4 V vs Li⁺/Li) et surtout par sa première charge extrêmement faible (20 mAh/g).

En outre, le vanadium pose des problématiques de toxicité et de coût limitant son application pérenne dans le secteur de la mobilité électrique ou du stockage stationnaire notamment.

Un objectif de l'invention est ainsi de fournir des composés qui ne présentent pas les inconvénients précités.

En particulier, un objectif de l'invention est de fournir des composés susceptibles d'être utilisés avec succès pour la préparation d'électrodes positives, en particulier d'accumulateurs métal-ion (le métal étant en particulier un métal alcalin ou alcalino-terreux, par exemple Li, Na, K, Mg ou Ca), ayant des capacités élevées et/ou des hautes densités d'énergie, notamment plus élevées que celles relatives aux dispositifs de l'art antérieur, tout en s'affranchissant de métaux critiques d'un point de vue économique et/ou toxiques, comme le cobalt ou le vanadium.

Aussi, la divulgation hors invention concerne un verre de formule (I) suivante :

x NiO - (100-x) P₂O₅ (I),

avec 50<x<100.

Par « verre », on entend notamment un composé solide métastable amorphe ou substantiellement amorphe.

Par « amorphe », on entend notamment un composé solide ne présentant aucune structure atomique ordonnée à moyenne et longue distance.

Par « substantiellement amorphe », on entend notamment que le composé est à plus de 97%, en particulier à plus de 98 ou 99% amorphe en masse.

Le caractère amorphe peut être déterminé par toute technique bien connue de l'homme du métier, en particulier par diffraction des rayons (DRX).

L'invention concerne un verre de formule (I) suivante :

x NiO - (100-x) P₂O₅ (I),

avec 50<x<100,
ledit verre étant un composé solide métastable, amorphe ou à plus de 97% amorphe en masse.

Selon un mode de réalisation particulier, x ≥ 51, avec en particulier x ≥ 52.

Selon un mode de réalisation particulier, x ≤ 95, avec en particulier x ≤ 90, 85, 80, 75, 70, 60, 59, 58, 57, 56, ou 55.

Selon un mode de réalisation particulier, l'invention concerne un verre tel que défini précédemment, dont la formule est choisie parmi les formules suivantes :
- 55 NiO - 45 P₂O₅ ; ou
- 52 NiO - 48 P₂O₅.

Pour toute formule (I) ou (I₀) particulière donnée, chaque valeur de x et de y s'entend à ± 0,5 % près, voire ± 1 % ou ± 2 % près. Ainsi, à titre d'exemple, une valeur de x ou y de 55 ± 1 %, comprend les valeurs de 54,45 à 55,55.Selon un autre aspect, l'invention concerne également un procédé de préparation d'un verre tel que défini précédemment, comprenant une étape (i) de trempe d'un mélange (A) en fusion, lequel est constitué de ou comprend une source de NiO et une source de P₂O₅, pour obtenir ledit verre.

Tous les modes de réalisation décrits précédemment relativement au verre de l'invention s'appliquent également ici, seuls ou en combinaison.

Selon un autre aspect, la divulgation hors invention concerne également un procédé de préparation d'un verre de formule (I₀) suivante :

x NiO - (100-x) P₂O₅ (I₀),

avec 15<x<100, notamment 20<x<100 ou 30<x<100, en particulier 40<x<100,
ledit procédé comprenant une étape (i) de trempe d'un mélange (A) en fusion, lequel est constitué de ou comprend une source de NiO et une source de P₂O₅, pour obtenir ledit verre.

Tous les modes de réalisation décrits précédemment relativement au verre de l'invention s'appliquent également ici, seuls ou en combinaison.

Selon un mode de réalisation particulier, la trempe peut être effectuée par coulée sur plaque, par exemple métallique, ou être effectuée sous contrainte mécanique, par exemple par marteau pilon.

Selon un mode de réalisation particulier, le procédé tel que défini précédemment comprend :
- une étape (i) de trempe d'un mélange en fusion (A), lequel est constitué de ou comprend une source de NiO et une source de P₂O₅, pour obtenir un verre intermédiaire ;
- une étape (ii) de concassage du verre intermédiaire obtenu à l'issue de l'étape (i) ;
- une étape (iii) de trempe du verre intermédiaire concassé obtenu à l'issue de l'étape (ii), préalablement en fusion, pour obtenir le verre tel que défini précédemment.

Selon un mode de réalisation particulier, le mélange en fusion de l'étape (i) tel que décrit précédemment, et/ou de l'étape (iii) tel que décrit précédemment, est, préalablement à la trempe, à une température T_{b} comprise de 1200°C à 1500°C, par exemple d'environ 1400°C.

Par « trempe », on entend notamment un passage de la température T_{b} à une température plus basse, en particulier la température ambiante, à une vitesse supérieure ou égale à environ 1000°C/min pour une trempe coulée sur plaque et supérieure ou égale à environ 10000°C/min pour une trempe de type marteau pilon.

Cette trempe peut notamment être réalisée à l'air, sur une plaque métallique, par exemple en acier.

Selon un mode de réalisation particulier, l'étape (i) telle que décrite précédemment, est précédée d'une étape de montée en température, d'une température Tₐ à la température T_{b}, la température Tₐ étant notamment comprise de 100°C à 400°C, en particulier de 300°C environ, à une vitesse de chauffage de 60°C/h à 120°C/h, par exemple environ 90 °C/h.

Selon un mode de réalisation particulier, le mélange en fusion de l'étape (iii) tel que décrit précédemment, est obtenu en introduisant le verre intermédiaire concassé de l'étape (ii), tel que décrit précédemment, directement à une température T_{b} comprise de 1200°C à 1500°C, par exemple d'environ 1400°C.

Selon un mode de réalisation particulier, le procédé selon l'invention, tel que défini précédemment, comprend :
- Une étape (i₀) de montée en température d'un mélange (A) constitué de ou comprenant une source de NiO et une source de P₂O₅, d'une température Tₐ à une température T_{b}, la température Tₐ étant notamment comprise de 100°C à 400°C, en particulier de 300°C environ, la température T_{b} étant notamment comprise de 1200°C à 1500°C, par exemple d'environ 1400°C, à une vitesse de chauffage de 60°C/h à 120°C/h, par exemple environ 90 °C/h, pour obtenir un mélange (A) en fusion ;
- une étape (i) de trempe du mélange en fusion (A), pour obtenir ledit verre.

Selon un mode de réalisation particulier, le procédé selon l'invention, tel que défini précédemment, comprend :
- Une étape (i₀) de montée en température d'un mélange (A) constitué de ou comprenant une source de NiO et une source de P₂O₅, d'une température Tₐ à une température T_{b}, la température Tₐ étant notamment comprise de 100°C à 400°C, en particulier de 300°C environ, la température T_{b} étant notamment comprise de 1200°C à 1500°C, par exemple d'environ 1400°C, à une vitesse de chauffage de 60°C/h à 120°C/h, par exemple environ 90 °C/h ;
- une étape (i) de trempe d'un mélange en fusion (A), lequel est constitué de ou comprend une source de NiO et une source de P₂O₅, pour obtenir un verre intermédiaire ;
- une étape (ii) de concassage du verre intermédiaire obtenu à l'issue de l'étape (i) ;
- une étape (iii₀) de montée en température du verre intermédiaire concassé à une température T_{b} comprise de 1200°C à 1500°C, par exemple d'environ 1400°C;
- une étape (iii) de trempe du verre intermédiaire concassé en fusion obtenu à l'issue de l'étape (iii₀), pour obtenir le verre tel que défini précédemment.

Selon un mode de réalisation particulier, le procédé selon l'invention, tel que défini précédemment, comprend :
- Une étape (i₀) de montée en température, sous agitation, d'un mélange (A) constitué de ou comprenant une source de NiO et une source de P₂O₅, d'une température Tₐ à une température T_{b}, la température Tₐ étant notamment comprise de 100°C à 400°C, en particulier de 300°C environ, la température T_{b} étant notamment comprise de 1200°C à 1500°C, par exemple d'environ 1400°C, à une vitesse de chauffage de 60°C/h à 120°C/h, par exemple environ 90 °C/h, pour obtenir un mélange (A) en fusion ;
- une étape (i) de trempe du mélange en fusion (A), pour obtenir ledit verre.

Selon un mode de réalisation particulier, l'agitation au cours de l'étape (i₀) est une agitation mécanique, en particulier par un agitateur à tige.

Selon un mode de réalisation particulier, la source de NiO comprend ou est constitué de NiO, Ni₂O₃, et/ou NiSO₄.

Selon un mode de réalisation particulier, la source de P₂O₅ comprend ou est constitué de NH₄H₂PO₄, P₂O₅, (NaPO₃)₆, H₃PO₄, et/ou de (NH₄)₂HPO₄.

Selon un autre aspect, l'invention concerne également un verre susceptible d'être obtenu selon l'un des procédés définis précédemment.

Selon un autre aspect, l'invention concerne également une poudre constituée de ou comprenant des particules de verre tel que défini précédemment.

Selon un mode de réalisation particulier, les particules ont une taille comprise de 0,1 à 100 µm, en particulier de 0,1 à 50 µm, notamment de 1 à 50 µm.

Selon un mode de réalisation plus particulier, les particules ont une taille comprise de 0,1 à 5 voire 2 µm.

Tous les modes de réalisation décrits précédemment relativement au verre de l'invention s'appliquent également ici, seuls ou en combinaison.

Selon un autre aspect, la divulgation hors invention concerne également une poudre constituée de ou comprenant des particules de verre de formule (I₀) suivante :

x NiO - (100-x) P₂O₅ (I₀),

avec 15<x<100, notamment 20<x<100 ou 30<x<100, en particulier 40<x<100.

Tous les modes de réalisation décrits précédemment relativement au verre de l'invention s'appliquent également ici, seuls ou en combinaison.

Selon un mode de réalisation particulier, la poudre telle que définie précédemment est dépourvue de KBr.

Selon un mode de réalisation particulier, les particules ont une taille comprise de 0,1 à 100 µm, en particulier de 50 à 100µm, ou de 0,1 à 50 µm, notamment de 1 à 50 µm.

Selon un mode de réalisation plus particulier, les particules ont une taille comprise de 0,1 à 5 voire 2 µm.

Par « taille », on entend en particulier la plus grande dimension d'une particule.

Cette taille est en particulier une taille moyenne, comme par exemple déterminé par granulométrie laser.

Selon un autre aspect, l'invention concerne également une poudre constituée de ou comprenant des particules de verre tel que défini précédemment et un additif conducteur électronique.

L'additif conducteur électronique, bien connu de l'homme du métier, peut être constitué de ou comprendre du carbone dur et/ou du graphite.

Selon un autre aspect, l'invention concerne également une poudre constituée de ou comprenant des particules de verre tel que défini précédemment et des particules de carbone.

Tous les modes de réalisation décrits précédemment relativement au verre et/ou aux particules de verre de l'invention s'appliquent également ici, seuls ou en combinaison.

Selon un mode de réalisation particulier, les particules ont une taille comprise de 0,1 à 100 µm, en particulier de 0,1 à 50 µm, notamment de 1 à 50 µm.

Selon un mode de réalisation plus particulier, les particules ont une taille comprise de 0,1 à 5 voire 2 µm.

Par « particules de carbone », on entend des particules constituant du noir de carbone.

Par « noir de carbone », on entend notamment une composition pulvérulente de carbone sous forme amorphe, laquelle est en particulier sous la forme d'une poudre constituée de ou comprenant des particules sphériques ou sphéroïdes de 5 à 500 nm (plus grande dimension), notamment inférieures à 100 nm.

Selon un autre aspect, la divulgation hors invention concerne également une poudre constituée de ou comprenant des particules de verre et un additif conducteur électronique, en particulier des particules de carbone, le verre étant de formule (I₀) suivante :

x NiO - (100-x) P₂O₅ (I₀),

avec 15<x<100, notamment 20<x<100 ou 30<x<100, en particulier 40<x<100.

Tous les modes de réalisation décrits précédemment relativement au verre et/ou aux particules de verre de l'invention s'appliquent également ici, seuls ou en combinaison.

Selon un mode de réalisation particulier, les particules de verre sont mélangées à des particules d'additif conducteur électronique, en particulier de carbone, constituant alors un matériau composite. Dans ce composite, les particules d'additif conducteur électronique, en particulier de carbone, sont distribuées de telle sorte qu'elles enveloppent les particules de verre.

Selon un mode de réalisation particulier, le rapport de la masse des particules de verre sur la masse des particules d'additif conducteur électronique, en particulier de carbone est compris de 90/5 à 50/40, ce rapport étant par exemple de 70/25.

Selon un autre mode de réalisation particulier, le rapport de la masse des particules de verre sur la masse des particules d'additif conducteur électronique, en particulier de carbone, est compris de 96/2 à 90/5.

Selon un autre aspect, l'invention concerne également une poudre constituée de ou comprenant des particules de verre tel que défini précédemment, un additif conducteur électronique, en particulier des particules de carbone, et un liant.

Tous les modes de réalisation décrits précédemment relativement au verre et/ou aux particules de verre de l'invention s'appliquent également ici, seuls ou en combinaison.

Selon un autre aspect, la divulgation hors invention concerne également une poudre constituée de ou comprenant des particules de verre, un additif conducteur électronique, en particulier des particules de carbone, et un liant, le verre étant de formule (I₀) suivante :

x NiO - (100-x) P₂O₅ (I₀),

avec 15<x<100, notamment 20<x<100 ou 30<x<100, en particulier 40<x<100.

Tous les modes de réalisation décrits précédemment relativement au verre et/ou aux particules de verre de l'invention s'appliquent également ici, seuls ou en combinaison.

Selon un mode de réalisation particulier, le liant est un polymère, notamment choisi parmi polyfluorure de vinylidène (PVDF).

Selon un mode de réalisation particulier, la poudre telle que définie précédemment, comprend, en masse :
- de 50 à 90% de particules de verre tel que défini précédemment, en particulier 70% ;
- de 5 à 40% de particules de carbone, en particulier 25% ; et
- de 5 à 10% de liant, en particulier 5%.

Selon un mode de réalisation particulier, la poudre telle que définie précédemment, comprend, en masse :
- de 90 à 96% de particules de verre tel que défini précédemment ;
- de 2 à 6% de particules de carbone, en particulier ; et
- de 2 à 4% de liant.

Selon un autre aspect, l'invention concerne également un procédé de préparation d'une poudre tel que définie précédemment, comprenant une étape a) de broyage d'un verre tel que défini précédemment.

Tous les modes de réalisation décrits précédemment relativement au verre et/ou aux particules de verre, et/ou à une poudre de l'invention s'appliquent également ici, seuls ou en combinaison.

Selon un mode de réalisation particulier, le procédé de l'invention tel que défini précédemment comprend :
a) une première étape de broyage, en particulier à billes, d'un verre tel que défini précédemment, pour obtenir une première poudre de verre ;
b) une deuxième étape de broyage, en particulier à billes, d'une composition comprenant la poudre de verre obtenue à l'issue de l'épate précédente, ainsi qu'une poudre un additif conducteur électronique, en particulier de carbone.

Selon un mode de réalisation plus particulier, les particules de la première poudre de verre ont une taille comprise de 5 voire 10 à 20 µm.

Le broyage selon une étape a) telle que décrite précédemment peut notamment être réalisé à l'aide d'un vibro-broyeur, ou d'un attriteur (broyage par érosion). Dans le cas d'un vibro-broyeur, le verre est typiquement placé dans une cuve de broyage contenant une ou plusieurs billes de broyage. Par le biais d'oscillations de la cuve de broyage à l'horizontal, le matériau est broyé par impacts entre les billes de broyage, la cuve et le matériau à broyer.

Le broyage à billes selon une étape b) telle que décrite précédemment peut notamment être réalisé à l'aide d'un broyeur planétaire, ou d'un broyeur centrifuge.

Selon un autre aspect, l'invention concerne également l'utilisation d'un verre tel que défini précédemment ou d'une poudre telle que définie précédemment pour la réalisation d'une électrode, en particulier positive, notamment pour une pile ou un accumulateur métal-ion.

Tous les modes de réalisation décrits précédemment relativement au verre et/ou aux particules de verre, et/ou à une poudre de l'invention s'appliquent également ici, seuls ou en combinaison.

Selon un autre aspect, la divulgation hors invention concerne également l'utilisation d'un verre ou d'une poudre de verre pour la réalisation d'une électrode, en particulier positive, notamment pour une pile ou un accumulateur métal-ion, le verre étant de formule (I₀) suivante :

x NiO - (100-x) P₂O₅ (I₀),

avec 15<x<100, notamment 20<x<100 ou 30<x<100, en particulier 40<x<100.

Tous les modes de réalisation décrits précédemment relativement au verre et/ou aux particules de verre, et/ou à une poudre de l'invention s'appliquent également ici, seuls ou en combinaison.

Selon un autre aspect, l'invention concerne également une électrode, en particulier positive, notamment pour une pile ou un accumulateur métal-ion, comprenant un verre tel que défini précédemment ou d'une poudre telle que définie précédemment.

Tous les modes de réalisation décrits précédemment relativement au verre et/ou aux particules de verre, et/ou à une poudre de l'invention s'appliquent également ici, seuls ou en combinaison.

Selon un autre aspect, la divulgation hors invention concerne également une électrode, en particulier positive, notamment pour une pile ou un accumulateur métal-ion, comprenant un verre ou une poudre de verre, le verre de formule (I₀) suivante :

x NiO - (100-x) P₂O₅ (I₀),

avec 15<x<100, notamment 20<x<100 ou 30<x<100, en particulier 40<x<100.

Tous les modes de réalisation décrits précédemment relativement au verre et/ou aux particules de verre, et/ou à une poudre de l'invention s'appliquent également ici, seuls ou en combinaison.

Selon un autre aspect, l'invention concerne également un procédé de préparation d'une électrode, en particulier positive, notamment pour une pile ou un accumulateur métal-ion, ledit procédé comprenant une étape A) de mise en contact d'une poudre constituée de ou comprenant des particules de verre, un additif conducteur électronique, en particulier des particules de carbone, et optionnellement un liant, tel que définie précédemment, avec un support conducteur.

Tous les modes de réalisation décrits précédemment relativement au verre et/ou aux particules de verre, et/ou à une poudre de l'invention s'appliquent également ici, seuls ou en combinaison.

Selon un mode de réalisation particulier, le support conducteur est un support métallique, le métal étant notamment choisi parmi Al et Cu.

Selon un mode de réalisation particulier, le procédé de l'invention tel que défini précédemment comprend :
A₀) une étape de préparation d'une encre par ajout d'un solvant, notamment choisi parmi la N-méthyl-2-pyrrolidone (NMP), ou des polymères en base aqueuse (comme par exemple la carboxyméthylcellulose), à une poudre constituée de ou comprenant des particules de verre, un additif conducteur électronique, en particulier des particules de carbone et optionnellement un liant, le liant étant par exemple dissous au préalable dans un solvant, notamment la N-méthyl-2-pyrrolidone (NMP), telle que définie précédemment, et, optionnellement homogénéisation, en particulier par agitation mécanique, pour obtenir une suspension ;
A) une étape A) de mise en contact d'une suspension telle qu'obtenue à l'issue de l'étape A), avec un support conducteur, notamment par enduction, par exemple de type « doctor blade » pour obtenir un dispositif ;
B) optionnellement, une étape de séchage dudit dispositif ;
C) optionnellement une étape de mise en forme, notamment par pastillage, dudit dispositif, éventuellement séché, notamment à une température comprise de 50°C à 100°C, en particulier à environ 60°C, et/ou pendant 1 à 48 heures, par exemple pendant environ 24 heures.

Selon un autre aspect, l'invention concerne également une pile ou un accumulateur comprenant une électrode positive, comprenant un verre tel que défini précédemment ou d'une poudre telle que définie précédemment.

Tous les modes de réalisation décrits précédemment relativement au verre et/ou aux particules de verre, et/ou à une poudre de l'invention s'appliquent également ici, seuls ou en combinaison.

Selon un autre aspect, la divulgation hors invention concerne également une pile ou un accumulateur comprenant une électrode, en particulier positive, comprenant un verre ou une poudre de verre, le verre étant de formule (I₀) suivante :

x NiO - (100-x) P₂O₅ (I₀),

avec 15<x<100, notamment 20<x<100 ou 30<x<100, en particulier 40<x<100.

Tous les modes de réalisation décrits précédemment relativement au verre et/ou aux particules de verre, et/ou à une poudre de l'invention s'appliquent également ici, seuls ou en combinaison.

Selon un mode de réalisation particulier, la pile ou l'accumulateur tel que défini précédemment comprend en outre au moins un électrolyte, un séparateur, en particulier microporeux, et/ou une électrode négative, en particulier étant constituée de ou comprenant un métal choisi parmi Li, Na et K.

Ces éléments sont bien connus de l'homme du métier, qui pourra les sélectionner, notamment parmi les éléments du commerce, selon les besoins.

L'électrode négative peut également être constituée de ou comprenant du carbone dur ou du graphite.

Selon un mode de réalisation particulier, le matériau d'électrode positive de la pile ou l'accumulateur, tel que défini précédemment a une capacité spécifique théorique supérieure à 60 mAh/g, de préférence supérieure à 100 mAh/g, de préférence encore supérieure à 120 mAh/g et encore de préférence supérieure à 150 mAh/g, et finalement de préférence supérieure à 200mAh/g.

Les piles ou accumulateurs de l'invention peuvent par exemple être utilisées dans le domaine du stockage électrique, notamment stationnaire, ou en mobilité électrique, notamment pour de l'électronique portable ou mettable, en intégration dans des fibres et/ou des câbles, en particulier dans le cadre de batteries filaires, ou pour un usage médical.

En particulier, les piles ou accumulateurs de l'invention peuvent être utilisées dans le domaine de la mobilité électrique, notamment pour véhicules électriques, véhicules électriques hybrides rechargeables, véhicules hybrides, ou 2 roues électriques.

En particulier, les piles ou accumulateurs de l'invention peuvent être utilisées dans le domaine de l'électroportatif, notamment téléphonie, ordinateurs portables, ou outillage portatif.

Selon un autre aspect, l'invention concerne également une batterie comprenant une pile ou un accumulateur tel que défini précédemment.

Tous les modes de réalisation décrits précédemment relativement au verre et/ou aux particules de verre, et/ou à une poudre de l'invention, et/ou à une électrode, et/ou à un une pile ou accumulateur s'appliquent également ici, seuls ou en combinaison.

Selon un autre aspect, l'invention concerne également un système électroportatif ou adapté à la mobilité électrique, comprenant une batterie telle que défini précédemment.

Tous les modes de réalisation décrits précédemment relativement au verre et/ou aux particules de verre, et/ou à une poudre de l'invention, et/ou à une électrode, et/ou à un une pile ou accumulateur s'appliquent également ici, seuls ou en combinaison.

### DEFINITIONS

Tel qu'on l'entend ici, les plages de valeur sous forme de « x-y » ou « de x à y » ou « entre x et y » incluent les bornes x et y, les entiers compris entre ces bornes, ainsi que tous les autres nombres réels compris entre ces bornes.

Au sens de la présente description, les pourcentages se réfèrent à des pourcentages en masse par rapport à la masse totale de la formulation, sauf indication contraire.

### FIGURES

La **figure 1** présente un cycle thermique d'élaboration du verre 55 NiO - 45 P₂O₅, selon l'exemple 1.
La **figure 2** présente les 7 premiers cycles galvanostatiques du verre 55 NiO - 45 P₂O₅ en configuration Li-métal, selon l'exemple 2. Cyclage entre 1,8V et 3,6V à C/100, départ en décharge - Capacité théorique de 278 mAh/g pour 2 électrons échangés.
La **figure 3** présente les 19 premiers cycles galvanostatiques de 55 NiO - 45 P₂O₅ en configuration Na-métal, selon l'exemple 2. Cyclage entre 1,6V et 4,5V à C/100, départ en décharge. Capacité théorique utilisée : 142 mAh/g.
La **figure 4** présente les 27 premiers cycles galvanostatiques de 55 NiO - 45 P₂O₅ en configuration K-métal, selon l'exemple 2. Cyclage entre 1,6V et 4,5V à C/100, départ en décharge. Capacité théorique utilisé : 142 mAh/g.
La **figure 5** présente un cycle thermique d'élaboration du verre 52 NiO - 48 P₂O₅, selon l'exemple 3.

### EXEMPLES

### Exemple 1 : Préparation du verre 55 NiO - 45 P₂O₅ selon l'invention

Le vitrifiat 55 NiO - 45 P₂O₅ est élaboré par double trempe d'un bain de fonte (1400°C) en le coulant sur une plaque métallique. A la suite de la première trempe (Erreur ! Source du renvoi i ntrouvable.), le matériau est concassé puis rentrée à chaud dans le four à 1400°C. Ce concassage intermédiaire est susceptible de permettre, si nécessaire, d'homogénéiser le liquide en fusion. Il est maintenu de nouveau 30 minutes à cette température avant d'être trempé de nouveau sur une plaque métallique.

Le bain de fonte est obtenu en soumettant un mélange de poudres de précurseurs (NH₄H₂PO₄ pour le P₂O₅ et NiO pour le NiO) à un traitement thermique spécifique (Erreur ! Source du renvoi i ntrouvable.) permettant l'élimination des espèces chimiques non voulues (H₂O et NH₃), en particulier entre 150°C et 220°C pour les moles de NH₃ .

Les proportions molaires visées sont obtenues en pesant de façon adéquate les différentes poudres de précurseurs constituant le mélange, selon l'équation de réaction suivante :
2(NH₄H₂PO₄) + NiO -> [2 NH₃ + 3 H₂O] + P₂O₅ + NiO, avant de les placer dans un creuset Pt/Rh.

Le matériau brut (sans traitement thermique ultérieur tel qu'un recuit de stabilisation) est alors analysé pour déterminer son caractère amorphe, son homogénéité ainsi que sa composition chimique réelle.

Le caractère amorphe du matériau a été confirmé par Diffraction des Rayons X.

L'homogénéité élémentaire du verre a été confirmé par Microscopie Electronique à balayage (MEB) et la composition chimique a été confirmé par Spectroscopie des rayons X à dispersion d'énergie (EDX). Pour cela, une section polie a été réalisée à partir du matériau brut. Un certain nombre de pointés EDX ont été réalisés sur l'ensemble de la section polie.

La composition chimique du composé 55 NiO - 45 P₂O₅ telle qu'obtenue par EDX est consignée dans le tableau ci-dessous :

| 55 NiO - 45 P₂O₅ | |
|---|---|
| | %at. Ni |
| 21,22 ± 0,10 | 12,87 ± 0,17 |
| %mol P₂O₅ | %mol NiO |
| 45,18 ± 0,01 | 54,82 ± 0,01 |

Le verre est ensuite broyé 3min à 30Hz via un vibro-broyeur (Retsch MM400) afin d'être mis en forme en pile-bouton pour être caractérisé électrochimiquement.

### Exemple 2 : Caractérisations Electrochimiques du verre 55 NiO - 45 P₂O₅ selon l'invention

### ∘ Préparation des électrodes

Dans un premier temps, un mélange intime de matériau actif/noir de carbone (Carbone super C65) dans les proportions massiques 70/25 a été préparé en utilisant un broyeur énergétique (broyeur planétaire PM100) en voie sèche. Le protocole de broyage dure au total 6h, à 300 rpm, en alternant 5 min de broyage et 5 min de repos (afin d'éviter les échauffements locaux pouvant amener à une potentielle dévitrification/cristallisation), soit 3h de broyage effectif. Ensuite, la poudre issue du broyage est caractérisée par diffraction des rayons X pour s'assurer du caractère toujours amorphe du mélange verre/carbone.

La poudre de verre/carbone (i.e. matériau composite) obtenue est ensuite mélangée avec 5% massique de liant polymère (solution de 10% massique de Polyfluorure de Vinylidène (PVDF) diluée dans de la N-Méthyl-2-Pyrrolidone (NMP). Un ajout supplémentaire en solvant (NMP) est par la suite rajouté afin d'obtenir une encre de viscosité acceptable en vue d'être enduite. Cette encre, constituée d'une dispersion de particules de composite dans du PVDF et de la NMP est agitée mécaniquement (pendant 15 minutes à 1000 rotations par minutes) à l'aide d'un disperseur mécanique (Dispermat). Ce dernier permet notamment d'homogénéiser la dispersion et de disperser les agrégats de composites formés lors de l'étape de broyage. L'encre est ensuite enduite par la méthode « doctor blade » (table d'enduction avec râcle de fente réglée à 100 µm) sur une feuille d'aluminium, puis séchée pendant 24 heures à 60°C sous air pour éliminer le solvant résiduel (la NMP).

Après séchage, l'électrode obtenue est découpée en disques de 14 mm de diamètre, qui sont ensuite pressés à 10 tonnes. La masse des pastilles et leurs épaisseurs ont été mesurées. Les pastilles sont ensuite séchées sous vide pendant 48h à 80°C afin d'éliminer l'eau résiduelle. Enfin, les électrodes sont transférées en boite à gants ([H₂O] < 3 ppm, [O₂] < 1ppm), afin d'être montées en pile boutons.

### ∘ Réalisation des piles boutons

Les électrodes sont montées configuration dite en demi-pile bouton (format de type CR2032), en boite à gant, en configuration Li-métal ou Na-métal ou K-métal. Les électrodes sont disposées, dans un couvercle, à l'intérieur duquel un joint d'isolation est apposé. Deux séparateurs sont ajoutés sur l'électrode à tester: un feutre Viledon servant de réservoir d'électrolyte, et un séparateur microporeux Celgard prévenant les croissances dendritiques de sodium. Dans le cas d'une pile K-ion, un seul séparateur, le Whatmann, a été utilisé. Un volume de 150 µL d'électrolyte est ajouté à la propipette. Ensuite, la contre-électrode, une feuille de métal (Li, Na ou K) déposée sur une cale en acier inoxydable, est apposée au-dessus des séparateurs. Un ressort est ajouté sur la contre-électrode, puis la demi-pile bouton est fermée avec un petit couvercle et sertie.

Selon la configuration, les trois électrolytes utilisés sont les suivants:

| | |
|---|---|
| - Li-métal : | 1M de LiPF6 dans EC:DMC:EMC (1:1:1 vol.) |
| - Na-métal : | 1M de NaPF6 dans EC:DMC (50%_{vol.}:50%_{vol.}) + 2%ₘₐₛₛ. de FEC |
| - K-métal : | 0.7M de KPF6 dans EC:DEC (50%ᵥₒₗ.:50%_{vol.}) + 2%ₘₐₛₛ. de VC |

### ∘ Cyclages galvanostatiques

Les performances de la pile ainsi obtenue sont évaluées avec un banc de test de type ARBIN. Les piles sont typiquement cyclées au régime de C/100, à température ambiante, avec une fenêtre de potentiel entre *1,5V* e*t 4,5V.* La composition du verre ne contenant pas d'alcalin initialement, l'ensemble des tests sont initiés en décharge.

### ∘ Exemples de courbes de cyclage galvanosatique

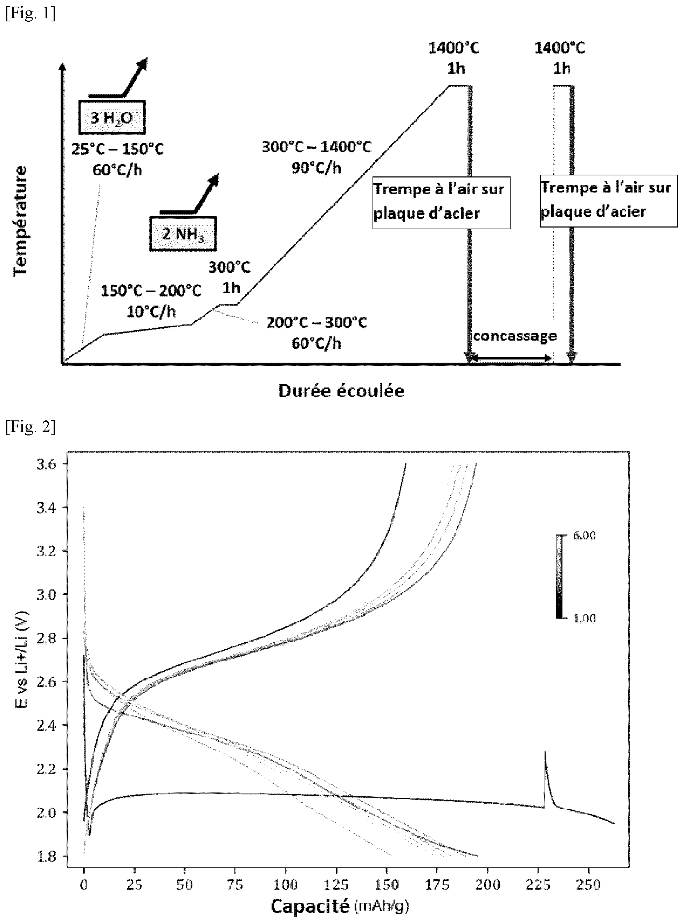

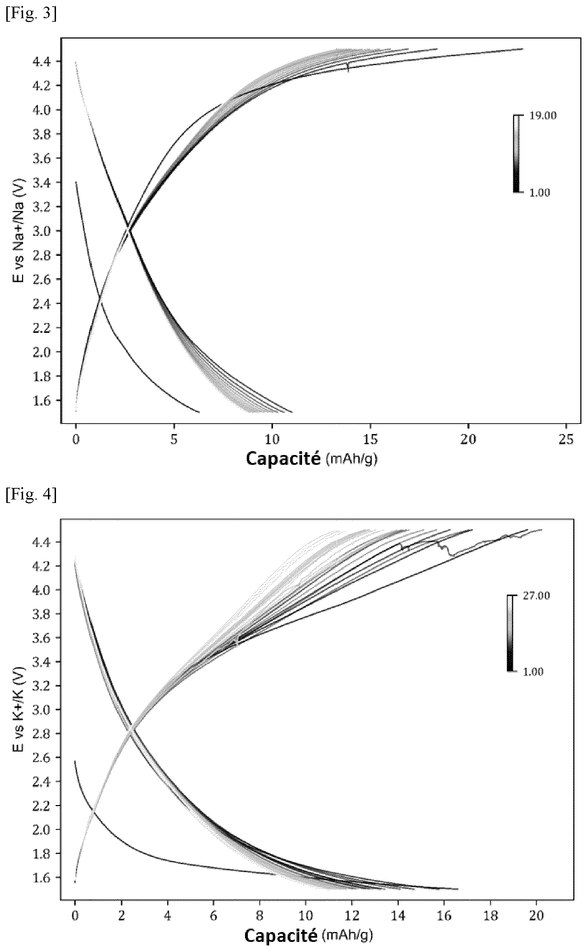

Les figures 2 **à 4** présentent des exemples de courbes de cyclage galvanosatique.

### Exemple 3 : Préparation du verre 52 NiO - 48 P₂O₅

Le vitrifiat 52 NiO - 48 P₂O₅ est élaboré par simple trempe d'un bain de fonte (1400°C) en le coulant sur une plaque métallique.

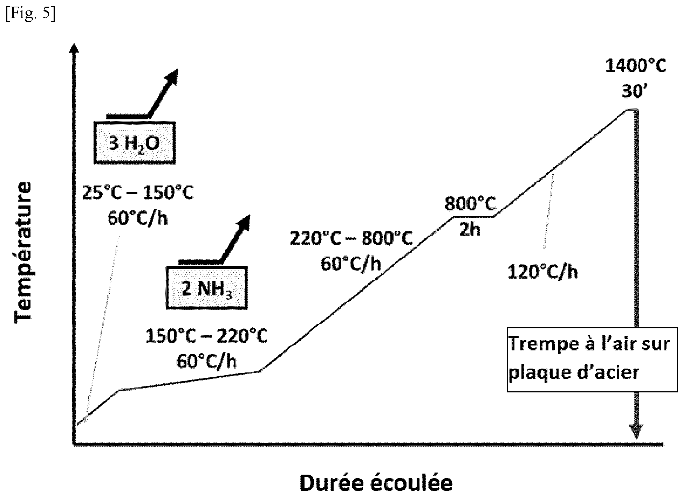

Le bain de fonte est obtenu en soumettant un mélange de poudres de précurseurs (NH₄H₂PO₄ pour le P₂O₅ et NiO pour le NiO) à un traitement thermique spécifique **(****Figure 5****)** permettant l'élimination des espèces chimiques non voulues (H₂O et NH₃).

Les proportions molaires visées sont obtenues en pesant de façon adéquate les différentes poudres de précurseurs constituant le mélange, selon l'équation de réaction suivante :
2(NH₄H₂PO₄) + NiO -> [2 NH₃ + 3 H₂O] + P₂O₅ + NiO, avant de les placer dans un creuset Pt/Rh. Le matériau brut (sans traitement thermique ultérieur tel qu'un recuit de stabilisation) est alors analysé pour déterminer son caractère amorphe, son homogénéité ainsi que sa composition chimique réelle.

Le caractère amorphe du matériau a été confirmé par Diffraction des Rayons X.

L'homogénéité élémentaire du verre a été confirmé par Microscopie Electronique à balayage (MEB) et la composition chimique a été confirmé par Spectroscopie des rayons X à dispersion d'énergie (EDX). Pour cela, une section polie est réalisée à partir du matériau brut. Un certain nombre de pointés EDX sont réalisés sur l'ensemble de la section polie.

La composition chimique du composé 52 NiO - 48 P₂O₅ telle qu'obtenue par EDX est consignée dans le tableau ci-dessous :

| 52 NiO - 48 P₂O₅ | |
|---|---|
| | %at. Ni |
| 21,85 ± 0,07 | 11,76 ± 0,12 |
| %mol P₂O₅ | %mol NiO |
| 48,17 ± 0,01 | 51,83 ± 0,01 |

Le verre est ensuite broyé 3min à 30Hz via un vibro-broyeur (Retsch MM400) afin d'être mis en forme en pile-bouton pour être caractérisé électrochimiquement.

### Exemple 4 : Caractérisations Electrochimiques du verre 52 NiO - 48 P₂O₅

### ∘ Préparation des électrodes

Dans un premier temps, un mélange intime de matériau actif/noir de carbone (Carbone super C65) dans les proportions massiques 70/25 a été préparé en utilisant un broyeur énergétique (broyeur planétaire PM100) en voie sèche. Le protocole de broyage dure au total 6h, à 300 rpm, en alternant 5 min de broyage et 5 min de repos (afin d'éviter les échauffements locaux pouvant amener à une potentielle dévitrification/cristallisation), soit 3h de broyage effectif. Ensuite, la poudre issue du broyage est caractérisée par diffraction des rayons X pour s'assurer du caractère toujours amorphe du mélange verre/carbone.

La poudre de verre/carbone (i.e. matériau composite) obtenue est ensuite mélangée avec 5% massique de liant polymère (solution de 10% massique de Polyfluorure de Vinylidène (PVDF) diluée dans de la N-Méthyl-2-Pyrrolidone (NMP). Un ajout supplémentaire en solvant (NMP) est par la suite rajouté afin d'obtenir une encre de viscosité acceptable en vue d'être enduite. Cette encre, constituée d'une dispersion de particules de composite dans du PVDF et de la NMP est agitée mécaniquement (pendant 15 minutes à 1000 rotations par minutes) à l'aide d'un disperseur mécanique (Dispermat). Ce dernier permet notamment d'homogénéiser la dispersion et de disperser les agrégats de composites formés lors de l'étape de broyage. L'encre est ensuite enduite par la méthode « doctor blade » (table d'enduction avec râcle de fente réglée à 100 µm) sur une feuille d'aluminium, puis séchée pendant 24 heures à 60°C sous air pour éliminer le solvant résiduel (la NMP).

Après séchage, l'électrode obtenue est découpée en disques de 14 mm de diamètre, qui sont ensuite pressés sous une pression de 10 tonnes. La masse des pastilles et leurs épaisseurs ont été mesurées. Les pastilles sont ensuite séchées sous vide pendant 48h à 80°C afin d'éliminer l'eau résiduelle. Enfin, les électrodes sont transférées en boite à gants ([H₂O] < «3 ppm, [O₂] < 1ppm), afin d'être montées en pile boutons.

### ∘ Réalisation des piles boutons

Les électrodes sont montées en configuration dite demi-pile bouton (format de type CR2032), en boite à gant, en configuration Li-métal ou Na-métal ou K-métal. Les électrodes sont disposées, dans un couvercle, à l'intérieur duquel un joint d'isolation est apposé. Deux séparateurs sont ajoutés sur l'électrode à tester: un feutre Viledon servant de réservoir d'électrolyte, et un séparateur microporeux Celgard prévenant les croissances dendritiques de sodium. Dans le cas d'une pile K-ion, un seul séparateur, le Whatmann, a été utilisé. Un volume de 150 µL d'électrolyte est ajouté à la propipette. Ensuite, la contre-électrode, une feuille de métal (Li, Na ou K) déposée sur une cale en acier inoxydable, est apposée au-dessus des séparateurs. Un ressort est ajouté sur la contre-électrode, puis la demi-pile bouton est fermée avec un petit couvercle et sertie.

Selon la configuration, les trois électrolytes utilisés sont les suivants:

| | |
|---|---|
| - Li-métal : | 1M de LiPF6 dans EC:DMC:EMC (1:1:1 vol.) |
| - Na-métal : | 1M de NaPF6 dans EC:DMC (50%_{vol.}:50%_{vol.}) + 2%ₘₐₛₛ. de FEC |
| - K-métal : | 0.7M de KPF6 dans EC:DEC (50%_{vol.}:50%_{vol.}) + 2%ₘₐₛₛ. de VC |

### ∘ Cyclages galvanostatiques

Les performances de la pile ainsi obtenue sont évaluées avec un banc de test de type ARBIN. Les piles sont typiquement cyclées au régime de C/100, à température ambiante, avec une fenêtre de potentiel entre *1,5V* e*t 4,5V.* La composition du verre ne contenant pas d'alcalin initialement, l'ensemble des tests sont initiés en décharge.

## Revendications

1. Verre de formule (I) suivante :
x NiO - (100-x) P₂O₅ (I),
avec 50<x<100,
ledit verre étant un composé solide métastable, amorphe ou à plus de 97% amorphe en masse.

2. Verre selon la revendication 1, dans lequel :
- x ≥ 51, avec en particulier x ≥ 52 ; et/ou
- x ≤ 95, avec en particulier x ≤ 90, 85, 80, 75, 70, 60, 59, 58, 57, 56, ou 55 ;
le verre étant par exemple d'une formule est choisie parmi les formules suivantes :
- 55 NiO - 45 P₂O₅ ; ou
- 52 NiO - 48 P₂O₅.

3. Procédé de préparation d'un verre selon la revendication 1 ou 2, comprenant une étape (i) de trempe d'un mélange (A) en fusion, lequel est constitué de ou comprend une source de NiO et une source de P₂O₅, pour obtenir ledit verre.

4. Procédé selon la revendication 3, comprenant :
- une étape (i) de trempe d'un mélange en fusion (A), lequel est constitué de ou comprend une source de NiO et une source de P₂O₅, pour obtenir un verre intermédiaire ;
- une étape (ii) de concassage du verre intermédiaire obtenu à l'issue de l'étape (i) ;
- une étape (iii) de trempe du verre intermédiaire concassé obtenu à l'issue de l'étape (ii), préalablement en fusion, pour obtenir le verre selon la revendication 1 ou 2;
ou dans lequel l'étape (i) telle que décrite dans la revendication 3 est précédée d'une étape d'agitation du mélange (A).

5. Procédé selon l'une quelconque des revendications 3 à 4, dans lequel :
- la source de NiO comprend ou est constitué de NiO, Ni₂O₃, et/ou NiSO₄ ; et/ou
- la source de P₂O₅comprend ou est constitué de NH₄H₂PO₄, P₂O₅, (NaPO₃)₆, H₃PO₄, et/ou de (NH₄)₂HPO₄.

6. Poudre constituée de ou comprenant des particules de verre tel que défini dans l'une quelconque des revendications 1 à 2, dans laquelle les particules ont notamment une taille comprise de 0,1 à 100 µm, en particulier de 0,1 à 50 µm.

7. Poudre selon la revendication 6, comprenant en outre un additif conducteur électronique, en particulier des particules de carbone, et optionnellement, un liant.

8. Electrode, en particulier positive, notamment pour une pile ou un accumulateur métal-ion, comprenant un verre selon la revendication 1 ou 2 ou une poudre selon la revendication 6 ou 7.

9. Procédé de préparation d'une électrode, en particulier positive, notamment pour une pile ou un accumulateur métal-ion, ledit procédé comprenant une étape A) de mise en contact d'une poudre constituée de ou comprenant des particules de verre, un additif conducteur électronique, en particulier des particules de carbone, et optionnellement un liant, selon l'une des revendications 6 à 7, avec un support conducteur.

10. Pile ou accumulateur comprenant une électrode, en particulier positive, comprenant un verre selon la revendication 1 ou 2 ou une poudre selon la revendication 6 ou 7, ayant notamment une capacité théorique supérieure à 60 mAh/g.

11. Batterie comprenant une pile ou un accumulateur selon la revendication 10.

12. Système électroportatif ou adapté à la mobilité électrique, comprenant une batterie selon la revendication 11.

## Patentansprüche

1. Glas der folgenden Formel (I):
x NiO - (100 - x)P₂O₅ (I),
wobei 50<x<100,
wobei das Glas eine metastabile, amorphe oder mit höchstens 97% amorpher Masse feste Verbindung ist.

2. Glas nach Anspruch 1, wobei:
- x≥51, wobei insbesondere x≥52; und/oder
- x≤95, wobei insbesondere ×≤90, 85, 80, 75, 70, 60, 59, 58, 57, 56 oder 55;
wobei das Glas beispielsweise eine Formel aufweist, die aus den folgenden Formeln ausgewählt ist:
- 55 NiO - 45P₂O₅; oder
- 52 NiO - 48P₂O₅.

3. Verfahren zur Herstellung eines Glases nach Anspruch 1 oder 2, umfassend einen Schritt (i) des Eintauchens einer geschmolzenen Mischung (A), die aus einer NiO-Quelle und einer P₂O₅-Quelle besteht oder diese umfasst, um das Glas zu erhalten.

4. Verfahren nach Anspruch 3, umfassend:
einen Schritt (i) des Eintauchens einer geschmolzenen Mischung (A), die aus einer NiO-Quelle und einer P₂O₅-Quelle besteht oder diese umfasst, um ein Zwischenglas zu erhalten;
einen Schritt (ii) des Zerkleinerns des am Ende von Schritt (i) erhaltenen Zwischenglases;
einen Schritt (iii) des Eintauchens des am Ende von Schritt (ii) erhaltenen zerkleinerten Zwischenglases, vor dem Schmelzen, um das Glas nach Anspruch 1 oder 2 zu erhalten;
oder wobei dem wie in Anspruch 3 beschriebenen Schritt (i) ein Schritt des Rührens der Mischung (A) vorangeht.

5. Verfahren nach einem der Ansprüche 3 bis 4, wobei:
- die NiO-Quelle NiO, Ni₂O₃ und/oder NiSO₄ umfasst oder aus diesen besteht; und/oder
- die P₂O₅-Quelle NH₄H₂PO₄, P₂O₅, (NaPO₃)₆, H₃PO₄ und/oder (NH₄)₂HPO₄ umfasst oder aus diesen besteht.

6. Pulver, das aus Glaspartikeln, wie in einem der Ansprüche 1 bis 2 definiert, besteht oder diese umfasst, wobei die Partikel besonders eine Größe von 0,1 bis 100 µm, insbesondere von 0,1 bis 50 µm aufweisen.

7. Pulver nach Anspruch 6, weiter umfassend einen elektronischen leitfähigen Zusatzstoff, insbesondere Kohlenstoffpartikel, und wahlweise ein Bindemittel.

8. Elektrode, insbesondere positiv, besonders für eine Metall-Ionen-Brennstoffzelle oder einen Metall-Ionen-Akkumulator, umfassend ein Glas nach Anspruch 1 oder 2 oder ein Pulver nach Anspruch 6 oder 7.

9. Verfahren zur Herstellung einer, insbesondere positiven, Elektrode, besonders für eine Metall-Ionen-Brennstoffzelle oder einen Metall-Ionen-Akkumulator, wobei das Verfahren einen Schritt A) des Inkontaktsetzens eines Pulvers, das aus Glaspartikeln besteht oder diese umfasst, eines elektronischen leitfähigen Zusatzstoffs, insbesondere Kohlenstoffpartikel, und wahlweise eines Bindemittels, nach einem der Ansprüche 6 bis 7, mit einem leitfähigen Träger umfasst.

10. Brennstoffzelle oder Akkumulator, umfassend eine, insbesondere positive, Elektrode, umfassend ein Glas nach Anspruch 1 oder 2 oder ein Pulver nach Anspruch 6 oder 7, das besonders eine theoretische Kapazität größer als 60mAh/g aufweist.

11. Batterie, umfassend eine Brennstoffzelle oder einen Akkumulator nach Anspruch 10.

12. Elektrowerkzeug- oder an elektrische Mobilität angepasstes System, umfassend eine Batterie nach Anspruch 11.

## Claims

1. A glass of the following formula (I):
x NiO - (100-x) P₂O₅ (I),
where 50<x<100,
said glass being a metastable solid compound that is amorphous or more than 97% amorphous by mass.

2. The glass according to claim 1, wherein:
- x ≥ 51, in particular x ≥ 52; and/or
- x ≤ 95, in particular x ≤ 90, 85, 80, 75, 70, 60, 59, 58, 57, 56, or 55;
the glass having, for example, a formula selected from the following formulas:
- 55 NiO - 45 P₂O₅; or
- 52 NiO - 48 P₂O₅.

3. A method for preparing a glass according to claim 1 or 2, comprising a step (i) of quenching a molten mixture (A), which consists of or comprises a source of NiO and a source of P₂O₅, to obtain said glass.

4. The method according to claim 3, comprising:
- a step (i) of quenching a molten mixture (A), which consists of or comprises a source of NiO and a source of P₂O₅, to obtain an intermediate glass;
- a step (ii) of crushing the intermediate glass obtained at the end of step (i);
- a step (iii) of quenching the crushed intermediate glass obtained at the end of step (ii), after first melting it, to obtain the glass according to claim 1 or 2;
or wherein step (i) as described in claim 3 is preceded by a step of stirring the mixture (A).

5. The method according to any one of claims 3 to 4, wherein:
- the source of NiO comprises or consists of NiO, Ni₂O₃, and/or NiSO₄; and/or
- the source of P₂O₅ comprises or consists of NH₄H₂PO₄, P₂O₅, (NaPO₃)₆, H₃PO₄, and/or (NH₄)₂HPO₄.

6. A powder consisting of or comprising glass particles as defined in any one of claims 1 to 2, wherein the particles have a size of 0.1 to 100 µm, in particular 0.1 to 50 µm.

7. The powder according to claim 6, further comprising an electronically conductive additive, in particular carbon particles, and optionally, a binder.

8. An electrode, in particular a positive electrode, notably for a metal-ion cell or accumulator, comprising a glass according to claim 1 or 2 or a powder according to claim 6 or 7.

9. A method for preparing an electrode, in particular a positive electrode, notably for a metal-ion battery or accumulator, said method comprising a step A) of bringing into contact a powder consisting of or comprising glass particles, an electronically conductive additive, in particular carbon particles, and optionally a binder, according to one of claims 6 to 7, with a conductive support.

10. A cell or accumulator comprising an electrode, in particular a positive electrode, comprising a glass according to claim 1 or 2 or a powder according to claim 6 or 7, having in particular a theoretical capacity greater than 60 mAh/g.

11. A battery comprising a cell or an accumulator according to claim 10.

12. A portable electrical system or a system adapted for electric mobility, comprising a battery according to claim 11.
